# EUROPEAN PATENT APPLICATION

(11) **EP 4 644 234 A1**
(43) Date of publication of application: **05.11.2025**
(21) Application number: 24173816.0
(22) Date of filing: 02.05.2024
(51) Int. Cl.: B64C 9/24

(54) **LEADING EDGE MOVABLE DEVICE OF AN AIRCRAFT WING**

(71) Applicant: Airbus Operations GmbH, 21129 Hamburg (DE)
(72) Inventor: Fees, Martin, 21129 Hamburg (DE); Roy, Jan-Paul, 21129 Hamburg (DE)

(57) **Abstract**

A leading edge movable device 2 of an aircraft wing 110 comprising a leading edge arrangement 4 comprising a curved top skin 8 and a back skin 10, wherein the curved top skin 8 is configured to be exposed to an ambient airflow. The device 2 further comprising a trailing edge component 6 with a free edge portion 14 and a connecting portion 12. The connecting portion 12 is coupled with the top skin 8 and the back skin 10 of the leading edge arrangement 4. The back skin 10 of the leading edge arrangement 4 is connected to a lower abutting portion 25 of the connection portion 12 of the trailing edge component 6. Further provided is a wing 110 comprising the leading edge movable device 2 and an aircraft 100 comprising the wing 110.

## Description

### FIELD OF THE INVENTION

The present invention generally relates to movable flow devices. In particular, the invention relates to a leading edge movable device of an aircraft wing, an aircraft wing, and an aircraft.

### BACKGROUND OF THE INVENTION

A leading edge movable device, also commonly referred to as a leading-edge slat or simply a slat, is an aerodynamic component found on the leading edge of aircraft wings. Its primary purpose is to improve the aerodynamic performance of the wing, particularly during takeoff and landing.

Leading edge movable devices can provide for increased lift, a delayed onset of stall at higher angles of attack by maintaining smooth airflow over the wing surface, an improved control and enhanced maneuverability. Thus, leading edge movable devices play a critical role in enhancing the overall performance, safety, and controllability of an aircraft, particularly during critical phases of flight such as takeoff and landing.

A leading edge movable is typically composed of several components or parts that are joined together, whereby the connecting sections should disturb the airflow as little as possible, which is all the more successful the fewer parts have to be joined together and the further away any fasteners are from the leading edge.

### SUMMARY OF THE INVENTION

It may be seen as an object of the invention to provide an improved leading edge movable device. The object of the present invention is solved by the subject-matter of the independent claims; further embodiments are incorporated in the dependent claims.

Provided is a leading edge movable device, a wing and an aircraft according to the features of the independent claims.

According to the invention, a leading edge movable device of an aircraft wing is provided. The device comprises a leading edge arrangement comprising a curved top skin and a back skin, wherein the curved top skin is configured to be exposed to an ambient airflow. The device further comprises a trailing edge component with a free edge portion and a connecting portion. The connecting portion of the trailing edge component is coupled with the top skin and the back skin of the leading edge arrangement and comprises a first section which is recessed with respect to the free edge portion, a second section with a lower abutting portion and a transition section connecting the first section and the second section. The first section and the second section of the connecting portion are shifted to each other in a chordwise direction, and the back skin is connected to the lower abutting portion of the second section of the connecting portion.

A " leading edge movable device" is a movable flow body of an aircraft wing and may also be referred to as "leading edge slat" or a "slat". A leading edge movable device comprises all kinds of slats, such as for example Kruger flaps, which are used at the leading edge of an aircraft wing. These are movable surfaces that can be deployed to increase lift during takeoff and landing, improving the aircraft's performance at low speeds.

The "leading edge arrangement" denotes one part of the leading edge movable device according to the invention, which points forwards in the direction of flight. The leading edge arrangement comprises a curved top skin, also referred to as a convex curved top skin, which may be supported by a ribbed structure or a stiffening element and forms the leading edge of the slat (device). The leading edge arrangement further comprises a back skin which forms the side facing away from the airflow. The back skin may also be supported by or attached to the stiffening element.

The "curved top skin" and the "back skin" may be a skin of an aircraft movable which is typically made of lightweight yet durable materials such as aluminum, composite materials (carbon fiber reinforced polymers), or a combination of both. The top skin may be "convex curved", i.e. may be curved outwards, the curvature being stronger at the leading edge.

The curved top skin is configured to be exposed to an ambient airflow and thus, may form an airflow-effective edge. An "airflow-effective edge" may also be referred to as a flow-effective edge or simply a leading edge. The term "airflow-effective edge" is commonly used in aerodynamics to describe a feature of an object, that is specifically designed to interact with the airflow in a way that produces a desired aerodynamic effect. Airflow-effective edges in an aircraft are typically sharp or curved edges, protrusions, or surfaces strategically placed to manipulate the flow of air around the object. On a wing or a slat, the leading edge and trailing edge are both airflow-effective edges. The leading edge is designed to smoothly and efficiently redirect airflow around the wing or slat, while a trailing edge of a wing may feature control surfaces (as, for example, in flaps or ailerons) that can be manipulated to adjust lift and control the aircraft's movement.

The "trailing edge component" is the second part of the leading edge movable device which may extend in a chordwise direction and points backwards in the direction of flight. The term "chordwise direction" refers to a direction that is parallel to the chord line of an airfoil or wing section. The chord line may be seen as an imaginary straight line that connects the leading edge to the trailing edge of an airfoil.

The trailing edge component according to the invention is a one-piece component and has a "free edge portion" at the rearmost part closest to the wing, and a "connecting portion" further forward in the direction of flight that is used to connect the two parts of the leading edge movable device by coupling both the top skin and the back skin of the leading edge arrangement with the connecting portion of the trailing edge component.

The "free edge portion" of the trailing edge component is not in contact with either the top skin or the back skin.

The "connecting portion" may also be referred to as a middle portion, a middle section or a middle part. In a cross-sectional view the connecting portion can be divided into three sections, a first section in an upper part, a second section in a lower part and a transition section, that may form a step from the upper part to the lower part thereby connecting the first section and the second section. Both the top skin and the back skin of the leading edge arrangement are coupled with the connecting portion of the trailing edge component.

The "first section" refers to a rearmost part of the connecting portion of the trailing edge component and is recessed with respect to the free edge portion of the trailing edge component. It could also be said that the first section comprises an "upper recessed portion". The upper recessed portion may be a stepped, lower-lying surface with respect to the free edge portion of the trailing edge component. The upper recessed portion can form the contact surface for a spanwise edge of the top skin, so that the top skin is flush with the upper part of the trailing edge component resulting in a smooth and even surface when the top skin rests on or is attached to the trailing edge component.

The "second section" has a lower abutting portion that extends forwards in the direction of flight. Thus, the "lower abutting portion" extends - from the middle or transition section - in a direction opposite to the extending direction of the free edge portion of the trailing edge component. The lower abutting portion abuts on or adjoins a lower portion of, for example, a step of the transition section.

The "transition section" connects the first section and the second section of the connecting portion of the trailing edge component. In an example, it may form, in a cross-sectional view, a step from an upper part to a lower part of the connecting portion of the trailing edge component.

The connecting portion of the trailing edge component provides for a new design principle that leads to several advantages: it allows the rivet line to be moved afterwards resulting in an improved aerodynamic performance due to the aft shift. As an element of aerodynamic performance, the laminarity of the airflow which may be referred to the degree to which air moves smoothly and predictably in parallel layers without significant mixing or turbulence, can also be improved. For example, if the airflow is already turbulent, the displaced rivet line causes a later disturbance of the airflow due to imperfections. In addition, the number of flanges needed can be reduced and thus, the manufacturing is simplified.

According to an embodiment, the transition section forms a step from the first section to the second section of the connection portion of the trailing edge component.

A "step" commonly refers to a discontinuity or change in the shape. For example, the step may form a z-shape, i.e. may have a cross-section shaped like the letter Z. A "step" may involve moving downward from a higher to a lower level, such as descending stairs. Here, the step the transition section forms has the effect that, for example when the upper and lower skin of the leading edge arrangement are attached to an upper part and a lower part, respectively, of the trailing edge component, they are spaced apart and vertically offset from each other.

According to an embodiment, the trailing edge component comprises at least one pocket, for example underneath the upper recessed portion of the connecting portion. The pocket may also be referred to as a cavity, a recess, a pocketing or a hutch.

According to a further embodiment, the trailing edge component comprises a plurality of pockets, preferably arranged in a line in a spanwise direction. In another example the pockets may be arranged offset to each other to provide for an offset arrangement of pockets. Thus, there is not one single pocket over the whole span for reasons of stability and stiffness. The width of a rib between each pocket may be optimized to balance between weight and stiffness.

In a further embodiment, the pocket(s) is/are configured to receive a fastener element and thus, the width of the pocket may depend on the size of a formed fastener or a fastener tail. The "tail" of a fastener element typically refers to the part of the fastener that extends beyond the material being fastened. In the context of rivets, for example, the tail is the portion that protrudes out from the back side of the materials being joined after the rivet has been installed and set. This tail is often deformed or upset to secure the rivet in place and create a strong, permanent connection. In other types of fasteners such as bolts or screws, the "tail" may refer to the portion of the fastener that extends beyond the nut or the threaded end of the fastener that protrudes from the material after installation. In a preferred example, the pocket is configured such that the tail of the fastener element does not protrude beyond the cavity which is formed by the pocket.

By implementing pockets on the lower side of the connecting portion of the trailing edge component the usage of, for example, double countersunk solid rivets can be avoided.

According to an embodiment, a spanwise edge of the top skin rests on the first section of the connecting portion of the trailing edge component thereby forming a first contact area, and a spanwise edge of the back skin rests on an outer surface of the lower abutting portion thereby forming a second contact area.

A "spanwise edge" may also be referred to as a longitudinal edge or long edge of the top skin and the back skin, respectively. The top skin may comprise two spanwise edges arranged at a distance to the leading edge to delimit the structural extension of the top skin. Similarly, the back skin may comprise two spanwise edges.

As explained above, the design principle of the leading edge movable device according to the invention includes the combination of a leading edge arrangement comprising a top skin and a back skin and at a trailing edge component, wherein the top skin and the back skin of the leading edge arrangement are coupled with the trailing edge component at its connecting portion.

The "first contact area" can also be referred to as "first contact surface" and refers to an area or surface section on the upper side of the trailing edge component (viewed in cross-section) on which the spanwise edge of the top skin may rest. The first contact area may be located in the upper recessed portion in the first section of the connecting portion of the trailing edge component. If the spanwise edge of the top skin rests in the recessed portion, it may be flush with the trailing edge component resulting in a smooth surface. The "second contact area" or "second contact surface" refers to an area or surface section on the outer side of the lower abutting portion where a spanwise edge of the back skin may rest.

In an embodiment, the leading edge movable device further comprises at least one fastener element configured to fix, for example in the first contact area, the top skin of the leading edge arrangement to the connecting portion of the trailing edge component.

A common "fastener" is for example a flush rivet or flush fastener. Flush rivets provide a smooth surface when installed and are commonly used in aircraft construction to reduce aerodynamic drag and maintain the integrity of the aircraft's outer skin. They are typically made of aluminum or other lightweight materials compatible with aircraft structures. Additionally, other fasteners like screws or bolts may also be used depending on the specific design and requirements of the aircraft.

According to an embodiment, the fastener element has a protruding portion which protrudes from the bottom of a pocket, as mentioned above, but remains within the pocket. This means that a tail protrudes into the pocket but does not protrude beyond it.

In a preferred embodiment, the fastener element is a rivet. Depending on the arrangement of the pockets, the riveting arrangement may be offset or the rivets may be linearly aligned in a spanwise direction.

According to an embodiment, the spanwise edge of the top skin and the spanwise edge of the back skin are offset to each other in a cross-sectional view. When the spanwise edge of the top skin is attached to the upper part of the connecting portion of the trailing edge component and the spanwise edge of the back skin is attached to the lower part of the trailing edge component, it follows that the spanwise edges of the top skin and the back skin, respectively, are offset to each other due to the design principle of the trailing edge component according to the invention.

Likewise, in a further embodiment, the spanwise edge of the top skin and the spanwise edge of the back skin are vertically spaced apart from each other in a cross-sectional view when attached to the connecting portion of the trailing edge component due to the design principle of the trailing edge component as described above.

In an advantageous embodiment, the trailing edge component is designed to provide for a flush transition between the edges of the top skin and/or the back skin of the leading edge arrangement and the trailing edge component. That is, the upper recessed portion of the trailing edge component is dimensioned or designed in such a way that its recess is adapted to the thickness of the top skin, so that a smooth upper surface is created when the top skin is attached to the upper part of the connecting portion of the trailing edge component. That is, the surfaces of the trailing edge component are flush with the surfaces of the top skin and the back skin, respectively.

According to an embodiment, the leading edge movable device is a slat of an aircraft wing.

According to a further aspect, a wing is provided comprising a wing body and a leading edge movable device as explained above.

According to another aspect, an aircraft is provided comprising a wing according to the above description or a leading edge movable device according to the above description.

The inventive leading edge movable device may be seen as an approach to provide an improved design principle for a leading edge wing movable. In particular, an improved trailing edge component of the leading edge movable device is provided wherein the amount of parts is reduced. A spanwise top skin rivet line in the device can be moved afterward resulting in an improved aero performance, for example with respect to the laminarity of the airflow. As a further advantage, the billet size can be reduced and the manufacturing is simplified. The new principle, i.e. avoiding a structure such as, for example a honeycomb structure in the trailing edge of a movable leading edge device, also results in a lower sensitivity, for example with regard to impacts like hail or mishandling.

### BRIEF DESCRIPTION OF THE DRAWINGS

The present invention will hereinafter be described in conjunction with the following drawing figures, wherein like numerals denote like elements, and wherein:
Fig. 1 shows a schematic chordwise section of a leading edge movable device.
Fig. 2 shows a schematic chordwise section of a trailing edge of the leading edge movable device of Fig. 1.
Fig. 3a shows a chordwise section of a trailing edge of a leading edge movable device.
Figs. 3b and 3c show further schematic chorwise and spanwise sections of a trailing edge of the leading edge movable device.
Fig. 4 shows a shows a three-dimensional view of a trailing edge of a leading edge movable device.
Fig. 5 shows an aircraft having at least one leading edge movable device.

### DETAILED DESCRIPTION OF EMBODIMENTS

The representations and illustrations in the drawings are schematic and not to scale. A better understanding of the device described above may be obtained through a review of the illustrations accompanying this application together with a review of the detailed description that follows.

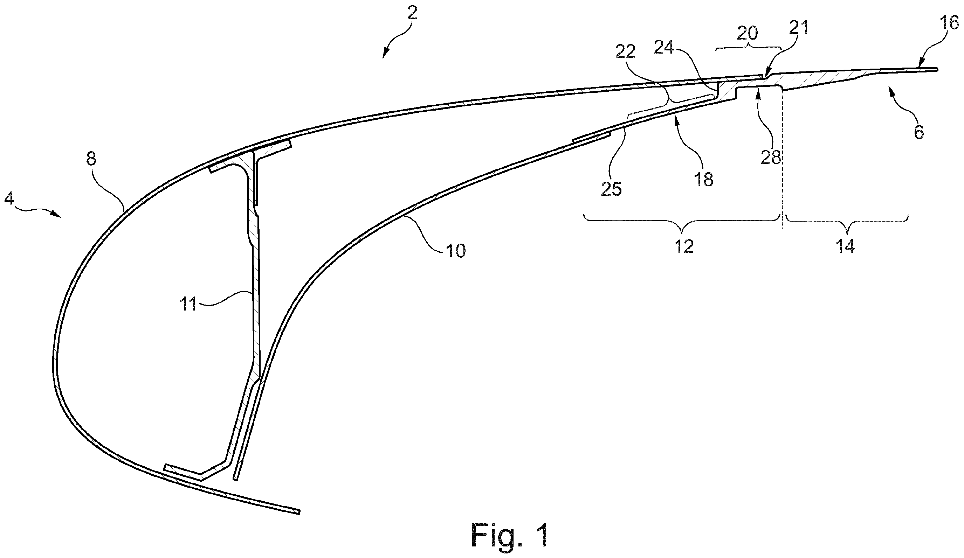

Fig. 1 shows a schematic chordwise section of the leading edge movable device 2. The leading edge movable device 2 comprises a leading edge arrangement 4 with a top skin 8 and a back skin 10, and a trailing edge component 6. An internal stiffening element 11 is also shown, over which the top skin 8 is guided, resulting in a curvature of the top skin 8. The trailing edge component 6 comprises a free edge portion 14 which is not in contact with either the top skin 8 or the back skin 10 of the leading edge arrangement 4, and a connecting portion 12. The connecting portion 12 of the trailing edge component 6 has an upper part 16 and a lower part 18 and comprises three sections, a first section 20 with an upper recessed portion 21 followed by a second section 22 with an abutting portion 25 further down; a transition section 24 connects the first section 20 and the second section 22. Fig. 1 further shows that the trailing edge component 6 of the device 2 is a one-piece component having a pocket 28 underneath the upper recessed portion 21. Here, the two parts of the leading edge movable device 2, i.e. the leading edge arrangement 4 and the trailing edge component 6, are combined in that a spanwise edge of the top skin 8 rests on the upper recessed portion 21 of the first section 20 of the connecting portion 12 and a spanwise edge of the back skin 10 rests on an outer surface of the lower abutting portion 25 of the second section 22 of the connecting portion 12 of the trailing edge component 6. In an example, the spanwise edge of the top skin 8 and the spanwise edge of the back skin are fixed to the connecting portion 12.

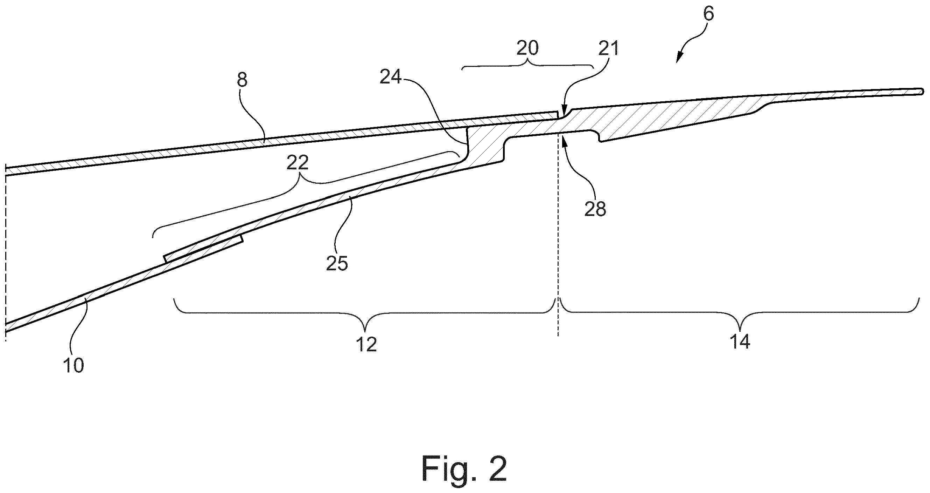

Fig. 2 shows a further cross-sectional and enlarged view of the trailing edge component 6 of the leading edge movable device 2 of Fig. 1. The top skin 8 of the leading edge arrangement 4 rests with one edge on the upper recessed portion 21, and the back skin 10 also rests with one edge on an outer surface of the lower abutting portion 25 of the second section 22 of the connecting portion 12 of the trailing edge component 6. Thus, the two edges appear displaced to each other in a chordwise direction and are also vertically offset from each other.

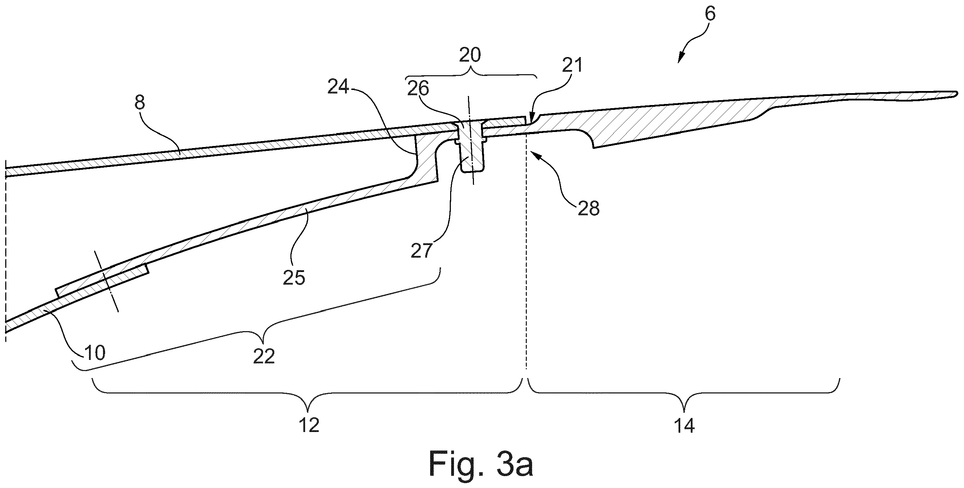

Fig. 3a is another enlarged view of a chordwise section of the trailing edge component 6 of the leading edge movable device 2 of Fig. 1. The top skin 8 is fixed to the trailing edge component 6 with a fastener element 26 which is, for example, a countersunk head rivet. A tail 27 of the rivet protrudes into the pocket 28 but does not protrude beyond it. The top of the countersunk rivet has been flattened so that it is flush with the top of the top skin 8 and provides a smooth aerodynamic surface. The back skin 10 is offset further down on the outer surface of the abutting portion 25 of the second section 22 of the trailing edge component 6 and can be attached there in a suitable manner. An aerodynamically good surface is not important at this location.

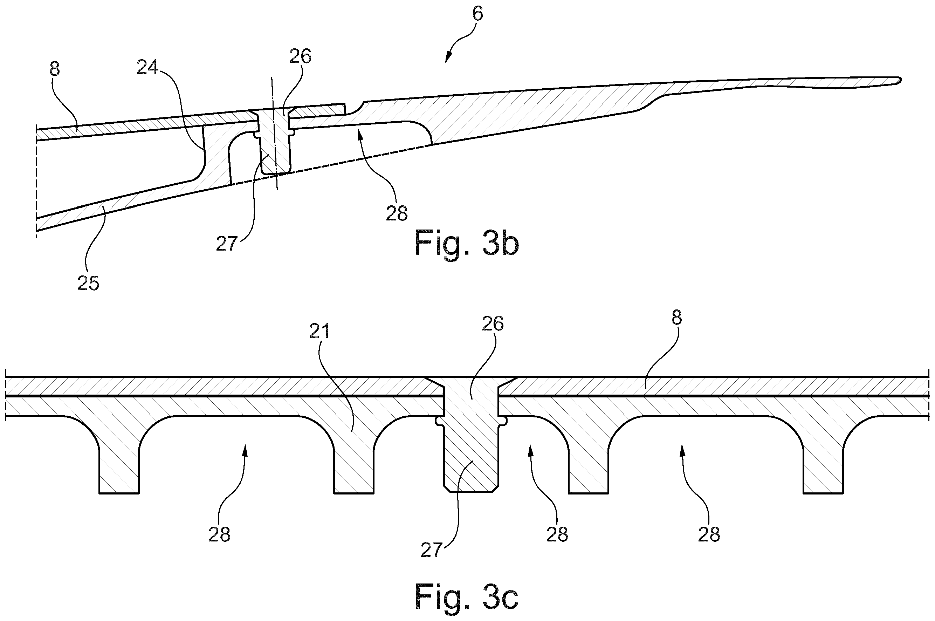

Figs. 3b and 3c show further enlarged sectional views of the trailing edge component 6 where the top skin 8 of the leading edge arrangement 4 is attached to the connecting portion 12 of the trailing edge component 6 with a rivet 26. It can be seen in Fig. 3b that the tail 27 of the rivet 26 does not protrude beyond the pocket which is open at the bottom (the dashed line being an imaginary boundary line). Fig. 3c presents another view, i.e. a spanwise section where the rivet tail 27 is received by the pocket 28. Here, too, it can be seen that the rivet tail 27 does not protrude beyond the pocket 28.

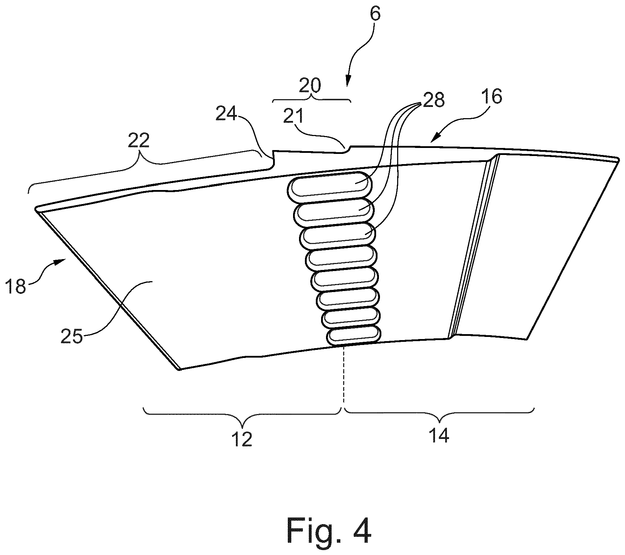

Fig. 4 shows a three-dimensional view of the one-piece trailing edge component 6 with an upper part 16 and a lower part 18 according to the invention. The free edge portion 14 is tapered and is slightly stepped. A plurality of pockets 28 aligned in a spanwise direction is visible in the connecting portion 12, arranged below the recessed portion 21 of the trailing edge component 6. The leading edge arrangement 4 (not shown here) can be joined to the trailing edge component 6 by attaching the top skin 8 of the leading edge arrangement 4 to the recessed portion 21 of the upper part 16 of the first section 20 of the connecting portion 12, and by attaching the back skin 10 of the leading edge arrangement 4 to an outer side of the lower abutting portion 25 of the connecting portion 12 of the trailing edge component 6. As an example, fastener elements 26 (as shown in Figs. 3a, 3b and 3c) which protrude into but not beyond the pockets 28 can be used to attach the top skin 8 to the trailing edge component 6.

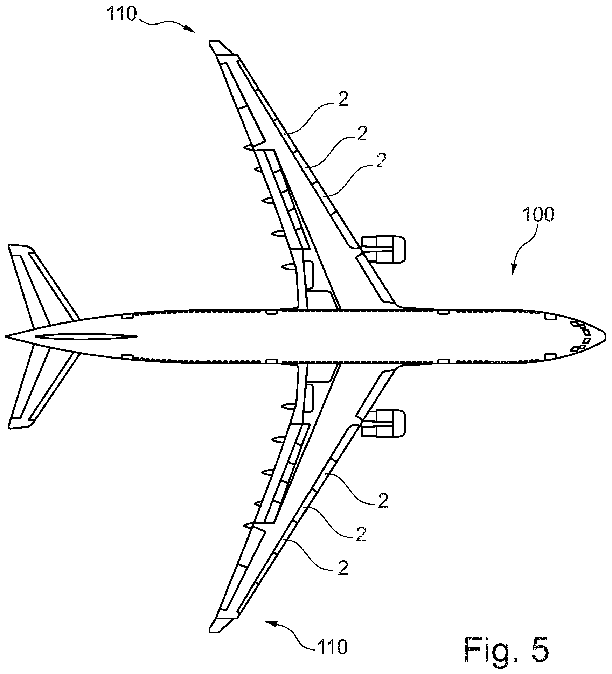

Finally, Fig. 5 shows an aircraft 100 comprising wings 110 with leading edge movable devices 2 according to the invention.

### REFERENCE SIGNS

- 2: leading edge movable device
- 4: leading edge arrangement
- 6: trailing edge component
- 8: top skin
- 10: back skin
- 11: stiffening element
- 12: connecting portion
- 14: free edge portion
- 16: upper part
- 18: lower part
- 20: first section
- 21: upper recessed portion
- 22: second section
- 24: transition section
- 25: lower abutting portion
- 26: fastener element
- 27: tail of fastener element
- 28: pocket
- 100: aircraft
- 110: aircraft wing

## Claims

1. A leading edge movable device (2) for an aircraft wing (110), the device comprising:
- a leading edge arrangement (4) comprising a curved top skin (8) and a back skin (10), wherein the curved top skin (8) is configured to be exposed to an ambient airflow; and
- a trailing edge component (6), with a free edge portion (14) and a connecting portion (12);
wherein the connecting portion (12) of the trailing edge component (6) is coupled with the top skin (8) and the back skin (10) of the leading edge arrangement (4);
wherein the connecting portion (12) of the trailing edge component (6) comprises a first section (20), a second section (22) with a lower abutting portion (25) and a transition section (24) connecting the first section (20) and the second section (22);
wherein the first section (20) of the connecting portion (12) is recessed with respect to the free edge portion (14) of the trailing edge component (6);
wherein the back skin (10) is connected to the lower abutting portion (25) of the second section (22) of the connecting portion (12); and
wherein the first section (20) and the second section (22) of the connecting portion (12) are shifted to each other in a chord-wise direction.

2. The leading edge movable device (2) according to claim 1, wherein the transition section (24) forms a step from the first section (20) to the second section (22) of the connection portion.

3. The leading edge movable device (2) according to claim 1 or claim 2, wherein the trailing edge component (6) comprises at least one pocket (28).

4. The leading edge movable device (2) according to any of the preceding claims, wherein the trailing edge component (6) comprises a plurality of pockets (28), preferably arranged in a line in a spanwise direction.

5. The leading edge movable device (2) according to claim 3 or 4, wherein the pocket(s) is/are configured to receive a fastener element (26).

6. The leading edge movable device (2) according to any of the preceding claims, wherein a spanwise edge of the top skin (8) rests on the first section (20) of the connecting portion (12) thereby forming a first contact area, and a spanwise edge of the back skin (10) rests on an outer surface of the lower abutting portion (25) thereby forming a second contact area.

7. The leading edge movable device (2) according to claim 6, further comprising at least one fastener element (26), wherein the fastener element (26) is configured to fix the top skin (8) of the leading edge arrangement (4) in the first contact area of the connecting portion (12) of the trailing edge component (6).

8. The leading edge movable device (2) according to claim 7, wherein the fastener element (26) has a protruding portion which protrudes from a bottom of the pocket (28) but remains within the pocket (28).

9. The leading edge movable device (2) according to claim 7 or 8, wherein the fastener element (26) is a rivet.

10. The leading edge movable device (2) according to any one of claims 6 to 9, wherein the spanwise edge of the top skin (8) and the spanwise edge of the back skin (10) are offset to each other.

11. The leading edge movable device (2) according to any one of claims 6 to 10, wherein the spanwise edge of the top skin (8) and the spanwise edge of the back skin (10) are vertically spaced apart from each other.

12. The leading edge movable device (2) according to any of the preceding claims, wherein the trailing edge component (6) is flush with the top skin (8) and/or the back skin (10).

13. The leading edge movable device (2) according to any of the preceding claims, wherein the leading edge movable device (2) is a slat of an aircraft wing (110).

14. An aircraft wing (110) comprising a wing body and a leading edge movable device (2) according to any of the preceding claims.

15. An aircraft (100) comprising an aircraft wing (110) according to claim 14 or a leading edge movable device (2) according to any one of claims 1 to 12.
